# EUROPEAN PATENT APPLICATION

(11) **EP 4 729 420 A1**
(43) Date of publication of application: **22.04.2026**
(21) Application number: 25184781.0
(22) Date of filing: 24.06.2025
(51) Int. Cl.: B64F 5/10, B23B 47/28, B64C 1/14

(54) **A MOUNTING ASSEMBLY**

(30) Priority: 18.10.2024 TR 2024014202
(71) Applicant: Tusas- Turk Havacilik Ve Uzay Sanayii Anonim Sirketi, 06980 Ankara (TR)
(72) Inventor: AKBAS, Korhan, 06980 ANKARA (TR); YILDIRIM, Omer, 06980 ANKARA (TR)
(74) Representative: Berkkam, Ayfer

(57) **Abstract**

This invention relates to a body (2), at least one opening (A) located on the body (2), at least one structural part (3) disposed on the body (2), which is positioned on the body (2) to provide substantially complete closure of the opening (A), at least one mounting surface (201) on the body (2), forming the periphery of the opening (A), which allows the structural part (3) to be mounted on the body (2).

## Description

The present invention relates to a flexible tool mounting assembly for mounting transparent objects in aircraft.

Helicopter transparencies are very difficult to assemble and prone to error due to their large surface area, changing position due to spring back effect, and not being able to be placed on the canopy contact surface in the correct position. In the production processes of composite structures, especially in the case of transparencies, it is observed that the composite products coming out of the mold are not in the same form as the mold and some amount of self-assembly is observed. Design and manufacturing differences are observed due to the springback effect. Especially for glass assembly, it is critical that the holes in the canopy and glass meet each other. The aforementioned installation errors may cause the canopy and transparency not to be used. External designs are important for ease of installation. In particular, there are external mounting devices for alignment by drilling holes before assembly.

The Chinese patent document CN217374882U, which is included in the state of the art, mentions a helicopter seat cabin door glass assembly. The seat cabin door glass comprises a helicopter seat cabin door glass mounting device comprising a carbon fiber frame and a rubber layer, the upper face of the carbon fiber frame being provided with a downwardly concave compression groove. The seat cabin door glass is embedded in the compression groove and the rubber layer is disposed between the lower face of the seat cabin door glass and the carbon fiber frame. A groove is formed on the side wall of the seat cabin door glass, and a protruding block corresponding to the groove is arranged on the side wall of the compression groove of the carbon fiber frame. The device has the advantages of fully absorbing the temperature difference stress, preventing the formation of mounting holes in the glass, ensuring that there is no stress point in the glass during the installation process, and ensuring the safety and stability of the glass.

The Chinese patent document CN219056549U, which is included in the state of the art, describes the assembly of a sealing element used in a helicopter cockpit door window. The transparent portion of a helicopter cockpit door including a large cabin door window provided with a pivoting window opening discloses a pivoting window protective structure. The window frame pressure plate is fixed by bolts to the outer ring of the pivoting window body and is located on the outside of the large cabin door window. The revolving window body corresponds to the revolving window opening, the lower side of the revolving window body is hinged to the large cabinet door window through a hinge, and the upper side of the revolving window body is locked and connected to the large cabinet door window. By means of a lock catching device, a strip of conductive sealing rubber is adhered to the edge of the rotary window body, wherein the surfaces of the large cabin door window and the rotary window body are covered with layers of protective film. Under the condition that the rotary window body is closed, the conductive sealing rubber strip is stretched and extruded to guarantee the sealing, and can be transmitted with the window frame pressing plate so that the sealing effect can be improved.

Thanks to a mounting device developed with this invention, the spring-back effect is eliminated, and the flexible tooling can be accurately positioned on the canopy surface.

Another purpose of this invention is that since the holes are drilled in the correct position with the flexible tool, when the bolts are tightened starting from the center point (center-post), they spread over the glass surface and the hole positions overlap.

The assembly device defined in the first claim and the claims dependent on this claim, which is realized in order to achieve the purpose of the invention, comprises at least one cut-out opening on the body, at least one structural part which is mounted on the body, the opening is almost completely closed and access to the body is prevented, and at least one structural part is placed on the opening to close the opening. It includes a mounting surface that forms the edges of the gap formed by the opening on the body, on which the structural part is placed and on which the structural part is fixed on the body. The mounting surface forms the frame of the body.

The assembly according to the invention comprises an alignment element which is placed on the mounting surface and has an opening therein, similar to a body frame. The alignment element is placed on the mounting surface. The alignment element is disposed on the mounting surface so that it almost completely overlaps the mounting surface. The alignment element has the same form as the body frame with an opening in it. After the fixing points to be drilled holes are determined on the mounting surface, the alignment element is removed from the mounting surface.

In one embodiment of the invention, the mounting assembly comprises a hole drilled in the mounting surface for mounting the user-specified structural part to the body.

The alignment element has the first position (I), in which is placed on the mounting surface to determine the fixing points for drilling holes. After the points to drill holes are determined by the alignment element, the alignment element is removed from the mounting surface and has the second position (II).

In one embodiment of the invention, the mounting assembly comprises a recess in the form of a recess for the structural part to be positioned on the mounting surface, which, when positioned on the mounting surface, almost completely overlaps and does not protrude from the body surface. In this way, an aerodynamic surface is created.

In one embodiment of the invention, the mounting assembly comprises a measuring device for determining fixing points for drilling holes on the mounting surface when the alignment element is on the mounting surface. In this way, it is ensured that an almost completely accurate point determination is made for mounting the structural part on the body.

In one embodiment of the invention, the mounting assembly comprises a clamp for fastening the alignment element on the mounting surface when the alignment element is in the first position (I). The clamp is clamped so as to contact the inside and outside of the housing, thereby preventing the alignment element from moving on the mounting surface.

In one embodiment of the invention, the assembly includes a flat surface on the alignment member. Following the flat surface is a curvature surface which has a curved form in harmony with the body. When the clamp is fixed on the mounting surface, the flat surface is first fixed with the clamp. After the flat surface, the curvature surface is fixed by means of the clamp. In this way, the fixing points for drilling holes almost completely coincide with the marked points without shifting the alignment element.

In one embodiment of the invention, the mounting assembly comprises a connector for fixing the structural part (II) on the mounting surface when the alignment member is in the second position.

In one embodiment of the invention, the assembly includes a structural part which is a canopy in an aircraft.

In one embodiment of the invention, the assembly includes a body which is a helicopter.

In one embodiment of the invention, mounting assembly comprises
- Placing the alignment element on the mounting surface,
- Clamping the alignment element on the mounting surface with a clamp,
- Determination of the fixing points to be drilled on the mounting surface with a measuring device
- Lifting the alignment element off the mounting surface in the second position (II)
- Placing the structural part almost completely overlapping the mounting surface
- Fixing the structural part on the body by means of connectors.

The assembly arrangement for achieving the object of the present invention is shown in the accompanying figures;
Figure 1 - Schematic view of the mounting assembly (1).
Figure 2 - Schematic view of the mounting assembly (1).

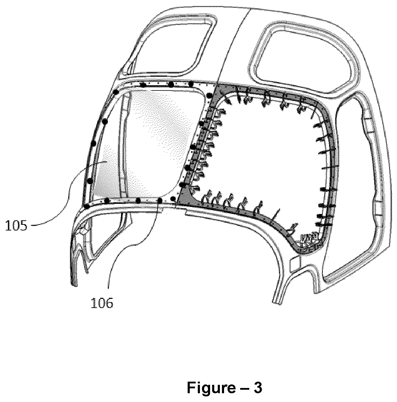

Figure 3 - Schematic view of the mounting assembly (1).

The parts in the figures are numbered one by one and the corresponding numbers are given below.
1. Mounting Assembly
2. Body
   201. Mounting Surface
3. Structural Part
4. Alignment Element
   401. Flat Surface
   402. Curvature surface
5. Hole
6. Slot
7. Measurement device
8. Clamp
9. Connector
   (A) Opening
      (I) First Position
      (II) Second Position
101. Placing the alignment element
102. Fixing the alignment element with a clamp
103. Determination of the points to drill holes
104. Removal of the alignment element
105. Placement of the structural part
106. Fixing the structural part

Mounting assembly (1), comprises a body (2), at least one opening (A) located on the body (2), at least one structural part (3) disposed on the body (2), which is positioned on the body (2) to provide substantially complete closure of the opening (A), at least one mounting surface (201) on the body (2), forming the periphery of the body (2), which allows the structural part (3) to be mounted on the body (2).

The inventive mounting assembly (1) comprises at least one alignment element (4) for mounting the structural part (3) on the body (2), which is of the same form as the mounting surface (201) and is placed by the user on the mounting surface (201), which is fixed on the body (2) so as to surround the mounting surface (201) and coincide with the fixing points predetermined by the user.

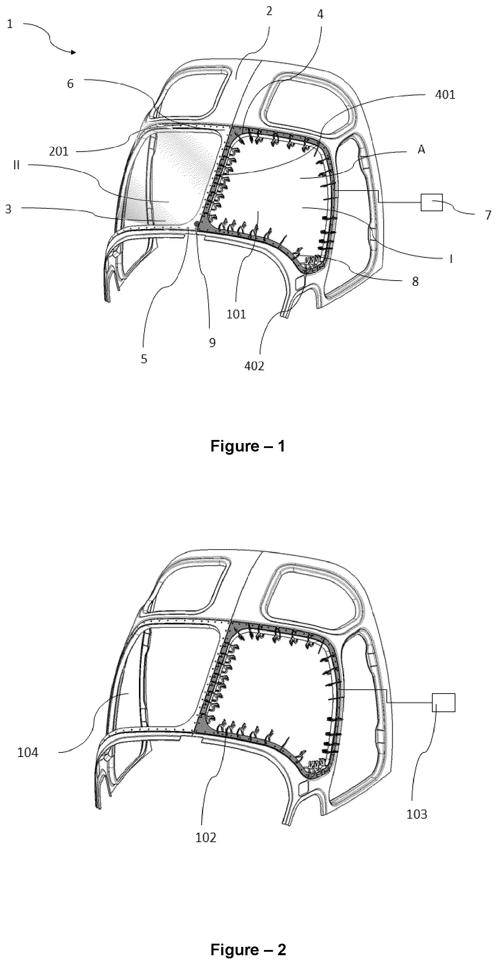

After the structural part (3) is placed on the body (2), it almost completely blocks access to the body (2). The structural part (3) serves to close the opening (A) in the body (2). It comprises a mounting surface (201) forming the frame of the body (2), on which the structural part (3) is placed and secured. (Figure 1)

It comprises an alignment element (4) which enables the structural part (3) to be mounted on the body (2) in such a way that it is almost completely overlapped, which is produced to be in the same form as the wall of the body (2), which is placed on the mounting surface (201) and which enables the points where the structural part (3) is to be fixed to be determined. The alignment element (4) is removed from the mounting surface (201) after determining the points where the hole (5) is to be drilled. The alignment element (4) is used to ensure that the hole (5) points are correctly determined. The alignment element (4) is in the form of a frame with an opening (A) inside (Figure - 2, Figure - 3).

In an embodiment of the invention, the mounting assembly (1) comprises at least one hole (5) drilled in the mounting surface (201) at fixing points predetermined by the user, a first position (I) in which the alignment element (4) is positioned on the mounting surface (201) so as to be opposed to the mounting surface (201) for determining the regions for drilling the hole (5), The alignment element (4) comprises a second position (II) in which the alignment element (4) enables the structural part (3) to be mounted on the body (2) according to the holes (5) aligned/drilled by lifting the alignment element (4) by the user from the mounting surface (201). In order to mount the structural part (3) on the body (2), it is necessary to determine the points on the mounting surface (201) at which holes (5) are to be drilled. In the first position (I), the alignment element (4) is placed on the mounting surface (201) and the points for drilling holes (5) are marked. In the second position (II), the alignment element (4) is removed from the mounting surface (201).

In one embodiment of the invention, the mounting assembly (1) comprises at least one slot (6) on the mounting surface (201), which is in the form of a recess, and which enables an aerodynamic surface to be formed on the body (2) by inserting the structural part (3) into the recesses thereon. On the mounting surface (201) on which the structural part (3) is to be mounted, there are slots (6) so as to overlap the mounting surface (201) of the structural part (3). In this way, an aerodynamic surface is formed on the body (2).

In one embodiment of the invention, the mounting assembly (1) comprises at least one measuring device (7) which enables the user to determine when the alignment element (4) is in the first position (I), the areas on the mounting surface (201) where holes (5) are to be drilled. By means of the measuring device (7), the margin of error is reduced by determining the locations where the hole (5) is to be drilled. The structural part (3) is assembled according to the marked points.

In one embodiment of the invention, the mounting assembly (1) comprises at least one clamp (8) on the alignment element (4) for holding the alignment element (4) and the mounting surface (201) together. By means of the clamps (8), the alignment element (4) is fixed to the mounting surface (201) to prevent it from slipping. This enables the measuring device (7) to measure more efficiently.

In one embodiment of the invention, the mounting assembly (1) comprises at least one flat surface (401) on the alignment element (4), at least one curvature surface (402) on the alignment element (4) which follows the flat surface (401), and clamps (8) which allow fixing towards the curvature surfaces (402) starting from the almost complete center of the flat surface (401), thereby allowing the hole (5) to be aligned more effectively. The clamps (8) are fixed starting from the center of the flat surface (401). The alignment element (4), which is almost completely overlapped with the mounting surface (201), is fixed on the body (2) by means of the clamps (8) from the flat surface (401) towards the curvature surface (402). In this way, the hole (5) points to be determined by the measuring device (7) are prevented from shifting.

In one embodiment of the invention, the mounting assembly (1) comprises at least one connector (9) for fastening the structural part (3) on the mounting surface (201) to the body (2). By means of the connector (9), which is a screw, the structural part (3) is fixed on the body (2).

In one embodiment of the invention, the mounting assembly (1) comprises a structural part (3) which is a canopy. The structural part (3) comprises a transparent object, such as glass.

In one embodiment of the invention, the mounting assembly (1) comprises a body (2) which is a helicopter.

In one embodiment of the invention mounting assembly (1) comprises, the alignment element (4) for carrying out the process steps
- Inserting the alignment element (4) on the mounting surface (201) into the slot (6) (101),
- Fixing the alignment element (4) on the mounting surface (201) by means of the clamp (8) (102),
- Determination of the areas to be holed (5) on the body (2) with the measuring device (7) (103),
- Lifting the alignment element (4) from the mounting surface (201) after detecting the parts to be holed (5) (104),
- Positioning the structural part (3) on the mounting surface (201) (105),
- mounting of the structural part (3) to the mounting surface (201) with connectors (9) (106).
- Placing the alignment element (4) is on the body (2) so that it coincides with the mounting surface (201) (101),
- Fixing the clamps (8) with the alignment element (4) over the body (2) to prevent the alignment element (4) from slipping on the housing (2) (102),
- Determining of the points for drilling the hole (5) by means of the measuring device (7) (103),
- Lifting the alignment element (4) in the second position (II) from the mounting surface (201) (104),
- Inserting the structural part (3) after removing the alignment element (4) (105),
- Fixing the structural part (3) to the body (2) by means of the connector (9) (106).

## Claims

1. A mounting assembly (1) **comprises** a body (2), at least one opening (A) located on the body (2), at least one structural part (3) disposed on the body (2), which is positioned on the body (2) to provide substantially complete closure of the opening (A), at least one mounting surface (201) on the body (2), forming the periphery of the body (2), which allows the structural part (3) to be mounted on the body (2) **characterized by** at least one alignment element (4) for mounting the structural part (3) on the body (2), which is of the same form as the mounting surface (201) and is placed by the user on the mounting surface (201), which is fixed on the body (2) so as to surround the mounting surface (201) and coincide with the fixing points predetermined by the user.

2. A mounting assembly (1) according to claim 1, **characterized by** at least one hole (5) drilled on the mounting surface (201) at the fixing points predetermined by the user, a first position (I) in which the alignment element (4) is disposed on the mounting surface (201) so as to be opposed to the mounting surface (201) for determining the areas in which the hole (5) is to be drilled, a second position (II) of the alignment element (4) which allows the structural part (3) to be mounted to the body (2) according to the aligned/drilled holes (5) by lifting the alignment element (4) by a user over the mounting surface (201).

3. A mounting assembly (1) according to claim 2, **characterized by** at least one slot (6) on the mounting surface (201) in the form of a recess, which allows an aerodynamic surface to be formed on the body (2) by inserting the structural part (3) into the recesses thereon.

4. A mounting assembly (1) according to any one of the preceding claims, **characterized by** at least one measuring device (7) enabling the user to detect, when the alignment element (4) is in the first position (I), the regions on the mounting surface (201) in which the hole (5) is to be drilled.

5. A mounting assembly (1) according to any one of the preceding claims, **characterized by** at least one clamp (8) on the alignment element (4) for holding the alignment element (4) and the mounting surface (201) together.

6. A mounting assembly (1) according to any one of the preceding claims, **characterized by** at least one flat surface (401) located on the alignment element (4), at least one curvature surface (402) located on the alignment element (4) and following the flat surface (401), a clamp (8) which allows fixing towards the curvature surfaces (402) starting from substantially the center of the flat surface (401), thereby allowing more efficient alignment of the hole (5).

7. A mounting assembly (1) according to any one of the preceding claims, **characterized by** at least one connector (9) for fastening the structural part (3) on the mounting surface (201) to the body (2).

8. A mounting assembly (1) according to any one of the preceding claims, **characterized by** the structural part (3) being a canopy.

9. A mounting assembly (1) according to any one of the preceding claims, **characterized by** the body (2) being a helicopter.

10. A method of assembling a mounting assembly (1) **characterized by** the process steps
- Inserting the alignment element (4) on the mounting surface (201) into the slot (6) (101),
- Fixing the alignment element (4) on the mounting surface (201) by means of the clamp (8) (102),
- Determining the areas for forming holes (5) on the body (2) with the measuring device (7) (103),
- Lifting the alignment element (4) from the mounting surface (201) after detecting the parts to be hole (5) (104),
- Positioning the structural part (3) on the mounting surface (201) (105),
- Assembling the structural part (3) to the assembly surface (201) with connectors (9) (106).
